# EUROPEAN PATENT APPLICATION

(11) **EP 4 382 331 A2**
(43) Date of publication of application: **12.06.2024**
(21) Application number: 23213624.2
(22) Date of filing: 01.12.2023
(51) Int. Cl.: B60K 1/00

(54) **PHASE CHANGE MATERIAL ENERGY STORAGE FOR ELECTRIC VEHICLE THERMAL MANAGEMENT SYSTEM AND METHOD**

(30) Priority: 08.12.2022 CN 202211571937; 01.05.2023 US 202318310347
(71) Applicant: Honeywell International Inc., Charlotte, NC 28202 (US)
(72) Inventor: YUAN, Weiye, Charlotte, 28202 (US); LU, Hong Quan, Charlotte, 28202 (US)
(74) Representative: LKGlobal UK Ltd.

(57) **Abstract**

An electric drive system with heat management includes an electric drive unit coupled with a battery system and a power conversion system. An energy storage unit contains at least one phase change material and is configured to manage thermal energy. A cooling system is configured to exchange heat and has a fluid system extending through the drive unit, the battery system, the power conversion system, the energy storage unit, and the cooling system. The fluid system configured to collect heat from the drive unit, the battery system and the power conversion system; selectively expel the heat through the cooling system; selectively store the heat in the energy storage unit in the at least one phase change material; and selectively supply heat from the energy storage unit to the battery system.

## Description

### CROSS REFERENCE TO RELATED APPLICATION

The present application claims benefit of prior filed Chinese Patent Application No. 202211571937.5 filed December 08, 2022, which is hereby incorporated by reference herein in its entirety.

### TECHNICAL FIELD

The present invention generally relates to electrified vehicles and more particularly relates to phase change material energy storage for heating and cooling selected systems of the electric vehicle's drive.

### BACKGROUND

Electric drive systems may be found in a number of applications including mobile and stationary platforms. Electrified vehicles may include aircraft, automobiles and watercraft. Stationary applications may include gensets, pumping stations, and other applications. For electric motor driven systems such as used in mobile platforms/vehicles and stationary platforms, the batteries include energy storage elements that are preferably maintained in an operating temperature range that is between a lower threshold and an upper threshold for efficiency and system longevity. Heating of batteries may be effected by electric heaters, which depletes battery charge. Cooling of batteries may be effected by conventional radiator devices. Electric powered heaters used to heat battery systems drain power that would otherwise be available for drive/propulsion purposes. As such, electric powered heaters reduce efficiency and deplete stored battery power without directly serving the primary system purposes. The effects of heating electrical consumption may be exacerbated in low temperature conditions.

Accordingly, it is desirable to provide improved systems and methods that enable selectively removing heat from drive systems and that enable selectively delivering heat to battery systems without reducing efficiency and without depleting the stored energy. It is also desirable to provide effective heating without large electrical consumption in a cost-effective manner. Furthermore, other desirable features and characteristics of the present invention will become apparent from the subsequent detailed description of the invention and the appended claims, taken in conjunction with the accompanying drawings and this background of the invention.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

In a number of embodiments, an electric drive system includes an electric drive unit coupled with a battery system and a power conversion system. An energy storage unit contains at least one phase change material and is configured to manage thermal energy. A fluid system extends through the drive unit, the battery system, the power conversion system, and the energy storage unit. The fluid system is configured to collect heat from the drive unit, the battery system and the power conversion system; selectively store the heat in the energy storage unit in the phase change material; and selectively supply heat from the energy storage unit to the battery system.

In a number of other embodiments, a method of operating an electric drive system includes coupling an electric drive unit with a battery system and a power conversion system. At least one phase change material is contained in an energy storage unit and is configured to manage thermal energy. A cooling unit is configured to exchange heat. A fluid system extends through the electric drive unit, the battery system, the power conversion system, the energy storage unit, and the cooling unit. The fluid system collects heat from the electric drive unit, the battery system and the power conversion system. The cooling system selectively expels the heat. The energy storage unit selectively stores the heat in the phase change material. Heat from the energy storage unit is selectively supplied to the battery system.

In a number of additional embodiments, a drive system of an aircraft includes an electric drive unit coupled with a battery system and a power conversion system. An energy storage unit contains at least one phase change material and is configured to manage thermal energy. A cooling unit is configured to exchange heat. A fluid system extends through the electric drive unit, the battery system, the power conversion system; the energy storage unit, and the cooling unit. A controller is coupled with the fluid system. The controller and the fluid system are configured to: collect heat from the electric drive unit, the battery system and the power conversion system; selectively expel the heat through the cooling system; selectively store the heat in the energy storage unit in the phase change material; and selectively supply heat from the energy storage unit to the battery system.

### BRIEF DESCRIPTION OF THE DRAWINGS

The present invention will hereinafter be described in conjunction with the following drawing figures, wherein like numerals denote like elements, and
FIG. 1 is a schematic diagram of an electric drive system with a thermal management system in a heating state and a charge mode without peak cooling demand, in accordance with an exemplary embodiment;
FIG. 2 is a schematic diagram of an electric drive system with a thermal management system in heating state and a charge mode with peak cooling demand, in accordance with an exemplary embodiment;
FIG. 3 is a schematic diagram of an electric drive system with a thermal management system in a heating state and a discharge mode, in accordance with an exemplary embodiment;
FIG. 4 is a schematic diagram of an electric drive system with a thermal management system in a cooling state and a charge mode, in accordance with an exemplary embodiment;
FIG. 5 is a schematic diagram of an electric drive system with a thermal management system in a cooling state and a discharge mode without peak cooling demand, in accordance with an exemplary embodiment;
FIG. 6 is a schematic diagram of an electric drive system with a thermal management system in a cooling state and a discharge mode with peak cooling demand, in accordance with an exemplary embodiment;
FIG. 7 is a flowchart of a process for thermal energy capture and storage by the system of FIGS. 1-6, in accordance with an exemplary embodiment; and
FIG. 8 is a flowchart of a process for the thermal energy use by the system of FIGS. 1-6, in accordance with an exemplary embodiment.

### DETAILED DESCRIPTION

The following detailed description is merely exemplary in nature and is not intended to limit the invention or the application and uses of the invention. Furthermore, there is no intention to be bound by any theory presented in the preceding background or the following detailed description.

The various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. Such block components (or modules) may be realized by any number of hardware, software, and/or firmware components configured to perform the specified functions.

The various illustrative logical blocks, modules, and circuits described in connection with the embodiments disclosed herein may be implemented or performed in a controller with a general purpose processor, a digital signal processor, an application specific integrated circuit, a field programmable gate array or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a digital signal processor and a microprocessor, a plurality of microprocessors, one or more microprocessors in conjunction with a digital signal processor core, or any other such configuration.

The steps of a process, method or algorithm described in connection with the embodiments disclosed herein may be embodied directly in hardware, in a software module executed by a processor, or in a combination of the two. A software module may reside in any form of storage medium known in the art. An exemplary storage medium may be coupled to the processor such that the processor reads information from, and writes information to, the storage medium. In the alternative, the storage medium may be integral to the processor.

Broadly, the exemplary embodiments discussed herein provide systems and methods for heating and cooling aspects of an electric drive system without drawing excessive power from the batteries. In embodiments, an electric drive system includes an electric drive unit coupled with a battery system and a power conversion system. In certain embodiments, the battery system may be any form of energy storage system that delivers electrical energy storage capabilities. Accordingly, as used herein, the term "battery system" is any system that stores electric energy for use by an electrical consuming device. The electric drive system of the current disclosure may include an energy storage unit containing at least one phase change material, and is configured to manage thermal energy collection, storage, and reuse. A cooling system configured to exchange heat may be included in or with the electric drive system. For example, a fluid system with a radiating heat exchanger may be included to remove and return heat from parts of the electric drive system and/or its ancillary systems. The fluid system may include conduits extending through the drive unit, the battery system, the power conversion system. The fluid system may also include the energy storage unit and the cooling system. The fluid system may operate to collect heat from any or all of the drive unit, the battery system and/or the power conversion system. The fluid system may be operated to selectively expel the heat through the cooling system. The fluid system may be operated to selectively store the heat in the energy storage unit in one or more one phase change materials. The fluid system may be operated to selectively supply heat from the energy storage unit to the battery system. In embodiments, the heat may be collected and stored to provide a mechanism for cooling of the electric drive system.

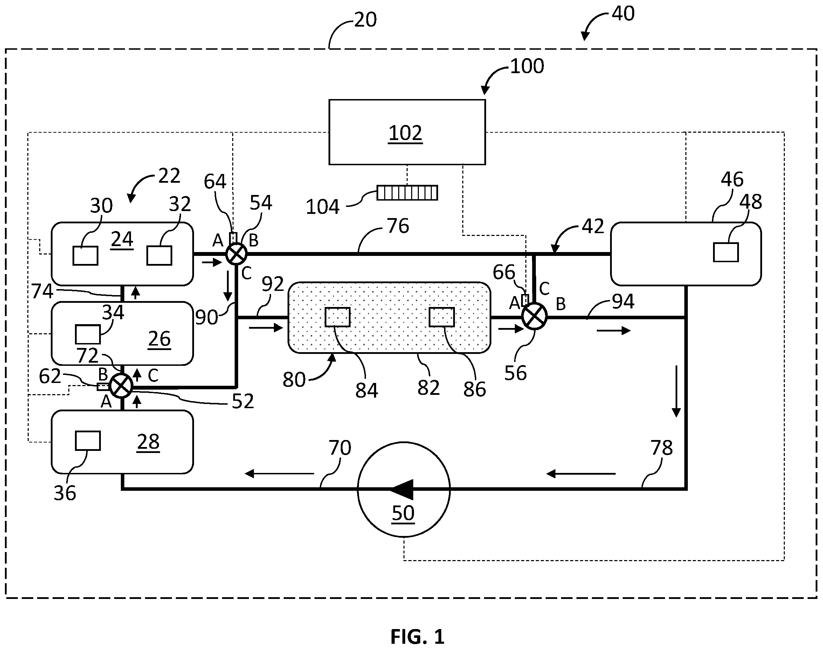

Referring to FIG. 1 illustrated is an electric vehicle 20 with an electric drive system 22. The electric vehicle 20 may be an aircraft, a land based vehicle such as an automobile, or a watercraft. In embodiments, the electric vehicle 20 may be an urban air mobility (UAM) aircraft or an electric vertical takeoff and landing (eVTOL) aircraft with electric propeller/rotor drive. The electric drive system 22 may be employed in a vehicle propulsion system, an auxiliary power unit or in other vehicle based systems. In some embodiments, the electric drive system 22 may be included in a stationary application such as a generator or other driven system. In the current embodiment, the electric drive system 22 includes a drive unit 24, a power conversion system 26 and a battery system 28. The drive unit 24 may include an electric motor 30, which may also operate as a generator, a torque transfer unit 32 and other features for delivering power. The torque transfer unit 32 may be coupled with a driveline for delivering the power for vehicle propulsion or other purposes, and may include a type of vehicle transmission. The power conversion system 26 serves as an intermediary device between the energy storage elements 36 of the battery system 28 and the drive unit 24 and operates to control the supply of power to the drive unit 24, such as to the electric motor 30. In general, the power conversion system 26 may include one or more power inverter modules 34 that may each generally include a variety of electronic devices.

A thermal management system 40 is coupled with the drive unit 24, the power conversion system 26 and the battery system 28. In operation, the drive unit 24, the power conversion system 26 and the battery system 28 may each generate heat. The thermal management system 40 includes a fluid system 42 that includes a number of fluid conduits for directing fluid flow through the various components. For example, the drive unit 24, the power conversion system 26 and the battery system 28 may each have internal flow conduits through which the fluid is circulated.

A cooling unit 46 is a part of the fluid system 42. The cooling unit 46 includes a heat exchanger 48, such as a tube and fin or other type of heat exchanger, for removing heat from the fluid in the fluid system 42, such as by radiating the heat to atmospheric air. The cooling unit 46 may include a fan to accelerate heat rejection. A pump 50 is included in the fluid system 42 for circulating the coolant fluid through the drive unit 24, the power conversion system 26, the battery system 28 and the cooling unit 46. In operation, the pump 50 circulates the fluid through, and collecting heat from, the drive unit 24, the power conversion system 26 and/or the battery system 28 and selectively expelling the heat through the heat exchanger 48 of the cooling unit 46.

The fluid system 42 includes a number of control valves 52, 54, 56 to control fluid flow through its various circuits. The control valves 52, 54, 56 may be of various constructions and in the current embodiment are each three-way, electrically operated valves with three ports "A," "B," and "C," each. For example, each valve 52, 54, 56 includes a respective actuator 62, 64, 66 to operate. The actuators 62, 64, 66 may be rotary or linear actuators to move the control valves 52, 54, 56 in response to control signals to connect a selective two of its ports while closing the third port, to open/connect all three ports, or to close all three ports. For example, to provide cooling of the drive system 22 by the cooling unit 46, control valve 52 is moved to connect port A with port B and close port C, control valve 54 is moved to connect port A with port B and close port C, and control valve 56 may be moved to close all ports A, B and C. As such, the pump 50 circulates the fluid through the drive system 22, including the drive unit 24, the power conversion system 26, the battery system 28, and then through the cooling unit 46. This includes circulating the fluid through a conduit 70, from the pump 50 to the battery system 28, through a conduit 72 from the battery system 28 to the power conversion system 26, through a conduit 74 from the power conversion system 26 to the drive unit 24, through a conduit 76 from the drive unit 24 to the cooling unit 46 and through a conduit 78 from the cooling unit 46 to the pump 50, completing the circuit.

The thermal management system 40 includes an energy storage unit 80 connected in the fluid system 42. The energy storage unit 80 may include a container 82 through which fluid may be circulated and may include at least one phase change material (PCM) 84, 86 inside the container 82. For example, the PCM(s) 84, 86 may be substances that absorb and/or release substantial amounts of latent heat during a change in their physical state (i.e., from solid to liquid and vice versa). When experiencing a given temperature change, the PCM(s) 84, 86 absorb more heat and with better heat storage performance as compared to a material without phase change (where energy is stored as sensible heat). The PCM(s) 84, 86 may be selected to have a phase change temperature that matches the needs of the thermal management system 40 as further described below.

The thermal management system 40 may be operated in heating and cooling states. For example, during relatively low ambient temperature conditions such as experienced in winter, the thermal management system may be operated in a heating state. Also for example, during relatively high ambient temperature conditions such as experienced in summer, the thermal management system 40 may be operated in a cooling state. In each of the heating state and the cooling state, the thermal management system 40 may be operated in a charge mode and in a discharge mode. In the heating state, charge means the energy storage unit 80 absorbs and stores heat. In the cooling state, charge means the energy storage unit 80 absorbs and stores cooling energy (release heat). In the discharge mode the energy storage unit 80 discharges stored heat. Charging in the heating state may include a peak cooling demand mode of operation and an off-peak cooling demand mode of operation as described in more detail below. Discharge during the cooling state may include a peak cooling demand mode of operation and an off-peak cooling demand mode of operation as described in more detail below.

In the heating state and charge mode and without a peak cooling demand, the thermal management system 40 is operated to collect heat from the drive system 22 and store it in the energy storage unit 80 as illustrated in FIG. 1. This mode includes circulating fluid in the fluid system 42 through the drive unit 24, the power conversion system 26, the battery system 28, the energy storage unit 80 and the pump 50. Energy is stored in the energy storage unit 80 as the pump 50 circulates fluid through the drive unit 24, the power conversion system 26 and the battery system 28 collecting heat and delivering that heat to the energy storage unit 80. The PCM(s) 84, 86 may be tuned to experience a phase change at temperatures corresponding to temperatures of the heated fluid leaving the drive system 22 to collect the heat. That temperature may be determined in advance by computer based modelling and/or characteristic testing and the PCM(s) 84, 86 may be formulated for that temperature.

In the heating state and charge mode without peak cooling demand of FIG. 1, the control valve 52 is moved to connect port A with port B and close port C, control valve 54 is moved to connect port A with port C and close port B, and control valve 56 may be moved to connect port A with port B, and close port C. As such, the pump 50 circulates the fluid through the heat collection circuit designated by the arrows of FIG. 1 including the drive unit 24, the power conversion system 26, the battery system 28 and the energy storage unit 80. This includes circulating the fluid through the conduit 70, from the pump 50 to the battery system 28, through the conduit 72 from the battery system 28 to the power conversion system 26, through the conduit 74 from the power conversion system 26 to the drive unit 24, through a conduit 90 from the conduit 76 (and the drive unit 24), to a conduit 92 and to the energy storage unit 80, through a conduit 94 from the energy storage unit 80 to the conduit 78, and through the conduit 78 from the conduit 94 to the pump 50, completing the circuit. Heat collected from the drive unit 24, the power conversion system 26, and/or the battery system 28, is stored in the PCM(s) 84, 86.

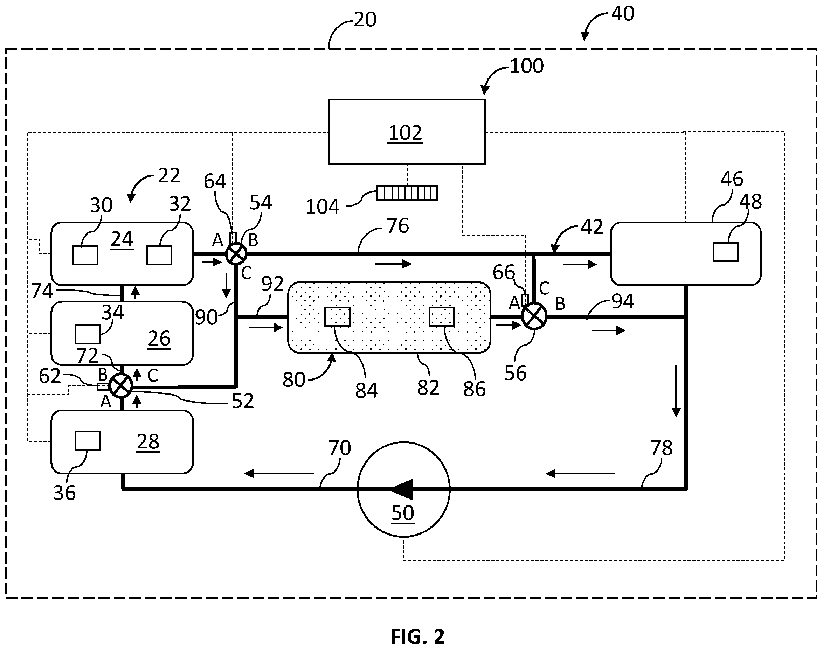

Referring to FIG. 2, illustrated is operation of the thermal management system 40 in the heating state and charge mode with peak cooling demand where fluid flow is designated by the arrows. In this mode cooling demand for the drive system 22 calls for both the cooling unit 46 and the energy storage unit 80 to provide cooling capacity. The cooling unit 46 expels heat to the atmosphere and the energy storage unit 80 collects heat by absorbing it in the PCM(s) 84, 86. The control valve 52 is moved to connect port A with port B and close port C, control valve 54 is moved to connect and open all ports A, B and C, and control valve 56 may be moved to connect port A with port B, and close port C. As such, the pump 50 circulates the fluid through the circuit designated by the arrows of FIG. 2 including the drive unit 24, the power conversion system 26, the battery system 28, the cooling unit 46 and the energy storage unit 80. This includes circulating the fluid through the conduit 70, from the pump 50 to the battery system 28, through the conduit 72 from the battery system 28 to the power conversion system 26, through the conduit 74 from the power conversion system 26 to the drive unit 24, through the conduit 90 from the conduit 76 (and the drive unit 24), to the conduit 92 and to the energy storage unit 80, through a conduit 94 from the energy storage unit 80 to the conduit 78, also through the conduit 76 to the cooling unit 46 and to the conduit 78, and through the conduit 78 from the cooling unit 46 and the energy storage unit 80/conduit 94 to the pump 50, completing the circuit. Heat collected from the drive unit 24, the power conversion system 26, and/or the battery system 28, is expelled to atmosphere by the cooling unit 46 and is stored in the PCM(s) 84, 86 of the energy storage unit 80.

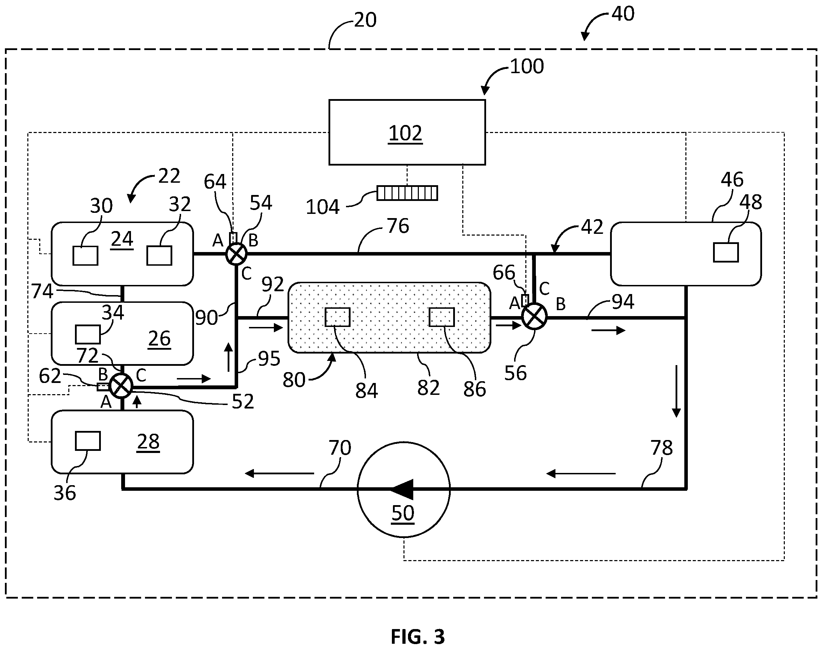

Referring to FIG. 3, illustrated is operation of the thermal management system 40 in the heating state and a discharge mode where fluid flow is designated by the arrows. In an example of reuse of the energy stored in the energy storage unit 80, when a cold start of the electric vehicle 20 is initiated, preheating of the battery system 28 may be desirable. For example, capacity and performance of the battery system 28 may benefit from pre-heating. Preheating may also be desirable before initiating charging of the batteries. To recover the stored energy, fluid is pumped by the pump 50 through a circuit including the battery system 28 and the energy storage unit 80. As illustrated in FIG. 3, the pump 50 circulates fluid through the battery system 28 delivering heat collected from the energy storage unit 80 in a circuit. The PCM 84 and/or 86 may be tuned to experience a phase change at the corresponding temperatures of the fluid in the fluid system 42 and expel the heat. In the heating state and discharge mode, the control valve 52 is moved to connect port A with port C and close port B, control valve 54 is moved to close all three ports A, B and C, and control valve 56 is moved to connect port A with port B and close port C. As such, the pump 50 circulates the fluid through a circuit of the fluid system 42 including the battery system 28 and the energy storage unit 80. This includes circulating the fluid through conduit 70, from the pump 50 to the battery system 28, through the conduit 72 to and through the control valve 52, through the conduit 95 from the control valve 52 to the conduit 92 and the energy storage unit 80, through the conduit 94 from the energy storage unit 80 to the conduit 78 to the pump 50, completing the circuit. Heat collected in the energy storage unit 80 is delivered to the battery system 28 for heating thereof.

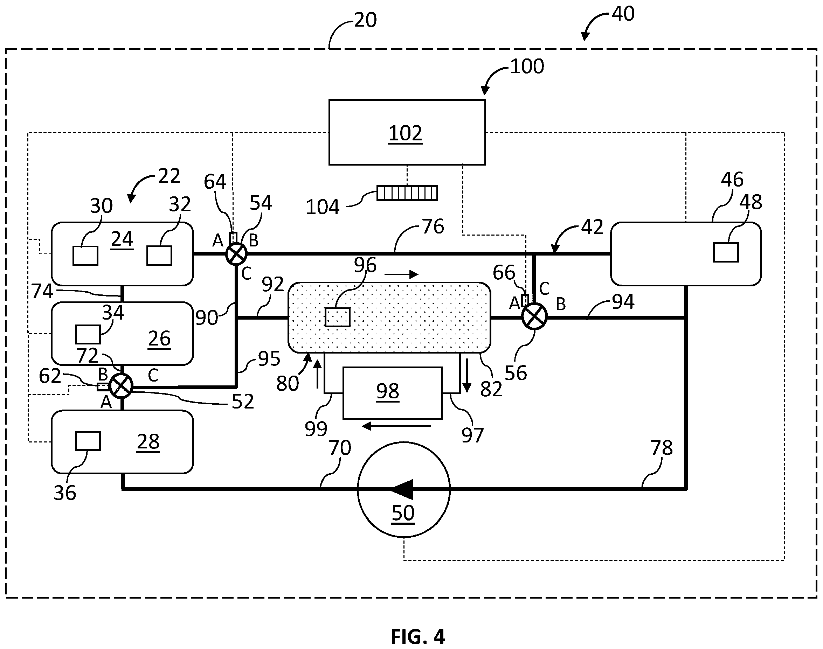

Referring to FIG. 4, a cooling state and charge mode of the thermal management system 40 is illustrated with flow designated by the arrows. In embodiments involving an aircraft as the electric vehicle 20, the energy storage unit 80 may be charged during summer conditions with the desired low-temperature PCM in the desired phase when the electric vehicle 20 is on the ground. For example, in preparation for a planned warm-weather flight, the PCM(s) 84, 86 may be replaced with a PCM 96 material tailored for cooling effectiveness. The energy storage unit 80 is coupled with ground based equipment 98 through conduits 97 and 99. The control valve 52 may be operated to close port C, the control valve 54 may be operated to close port C and the control valve 56 may be operated to close port A isolating the energy storage unit 80 in the fluid system 42. The ground based equipment 98 is configured, such as with a pump, to evacuate the PCM(s) 84, 86 from the container 82 and to replace them with the PCM 96 charging the energy storage unit 80. The ground based equipment pumps the PCM(s) 84, 86 out from the container 82 through the conduit 97 and pumps the PCM 96 into the container 82 through the conduit 99. Following the charge, the energy storage unit 80 is prepared to provide cooling capacity when needed.

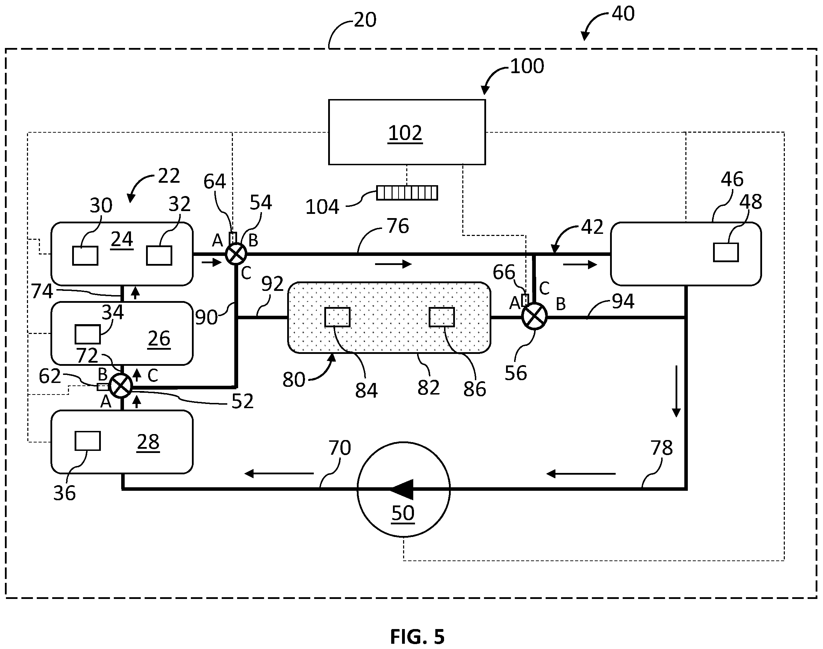

Referring to FIG. 5, a cooling state and discharge mode without peak cooling demand of the thermal management system 40 is illustrated with flow designated by the arrows. For example, in summer conditions the energy storage unit 80 may be charged as described in relation to FIG. 4. When cooling of the drive system 22 is needed but a peak cooling demand does not exist, the cooling unit 46 is operated to supply the cooling. To provide cooling of the drive system 22 by the cooling unit 46, control valve 52 is moved to connect port A with port B and close port C, control valve 54 is moved to connect port A with port B and close port C, and control valve 56 may be moved to close all ports A, B and C. As such, the pump 50 circulates the fluid through the drive system 22, including the drive unit 24, the power conversion system 26, the battery system 28, and then through the cooling unit 46. This includes circulating the fluid through a conduit 70, from the pump 50 to the battery system 28, through a conduit 72 from the battery system 28 to the power conversion system 26, through a conduit 74 from the power conversion system 26 to the drive unit 24, through a conduit 76 from the drive unit 24 to the cooling unit 46 and through a conduit 78 from the cooling unit 46 to the pump 50, completing the circuit.

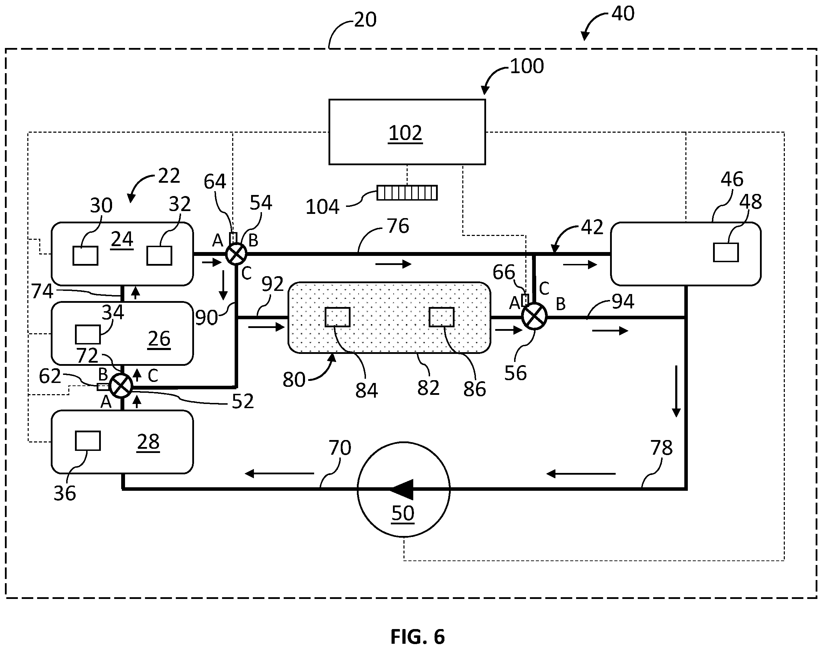

Referring to FIG. 6, a cooling state and discharge mode with peak cooling demand of the thermal management system 40 is illustrated with flow designated by the arrows. In summer conditions the energy storage unit 80 may be charged as described in relation to FIG. 4. A peak cooling demand means that more cooling capacity in needed than may be available from the cooling unit 46 alone. As such, cooling is provided by both the cooling unit 46 and the energy storage unit 80. The cooling unit 46 expels heat to the atmosphere and the energy storage unit 80 collects heat by absorbing it in the PCM 96. The control valve 52 is moved to connect port A with port B and close port C, control valve 54 is moved to connect all ports A, B and C, and control valve 56 may be moved to connect port A with port B, and close port C. As such, the pump 50 circulates the fluid through the circuit designated by the arrows of FIG. 6 including the drive unit 24, the power conversion system 26, the battery system 28, the cooling unit 46 and the energy storage unit 80. This includes circulating the fluid through the conduit 70, from the pump 50 to the battery system 28, through the conduit 72 from the battery system 28 to the power conversion system 26, through the conduit 74 from the power conversion system 26 to the drive unit 24, through the conduit 90 from the conduit 76 (and the drive unit 24), to the conduit 92 and to the energy storage unit 80, through a conduit 94 from the energy storage unit 80 to the conduit 78, also through the conduit 76 to the cooling unit 46 and to the conduit 78, and through the conduit 78 from the cooling unit 46 and the energy storage unit 80/conduit 94 to the pump 50, completing the circuit. Heat collected from the drive unit 24, the power conversion system 26, and/or the battery system 28, is expelled to atmosphere by the cooling unit 46 and is stored in the PCM(s) 84, 86 of the energy storage unit 80.

The thermal management system 40 includes a control system 100 with a controller 102 that controls operation of the thermal management system 40, including the control valves 52, 54, 56, the cooling unit 46, the energy storage unit 80, and the pump 50. In addition, the control system 100, through the controller 102 and/or additional controllers, may control operation of the drive unit 24, the power conversion system 26 and the battery system 28 to deliver the desired operational performance. The controller 102 may be coupled with a sensor system 104. The sensor system 104 includes one or more sensing devices that sense observable conditions of the electric vehicle 20 and/or of the thermal management system 40. In this embodiment, the sensing devices include, but are not limited to, an ambient temperature sensor, a battery system temperature sensor, a power conversion system temperature sensor, a drive unit temperature sensor, a thermal management unit temperature sensor and various fluid temperature sensors. It will be appreciated that the temperatures of various components of the thermal management system 40 may be determined from the various fluid temperature sensors that monitor temperatures of the fluid in the fluid system 42.

In general, the controller 102 uses the available inputs, including those from the sensor system 104 and from actuators identified herein, to provide the controller 102 with parameter data to effectively govern various functions, including of the thermal management system 40. For example, based on data input, the controller 102 computes and controls delivery of the appropriate control signals for operation of the control valves 52, 54, 56. The controller 102 may also control the power conversion system 26 and the drive unit 24, such as to deliver the appropriate amount of torque requested of the drive unit 24.

In the electric vehicle 20, it may be desirable to maintain the batteries in an optimal temperature range such as between 25 degrees Celsius and 45 degrees Celsius when the system is operating. Pre-heating of the battery system 28, such as of the energy storage elements 36 may be desired before starting electric vehicle 20, such as in low ambient temperature conditions. Preheating may also be desirable when initiating charging of the battery system 28. For example, when the temperature is below 0 °C, pre-heating before charging is desirable. In addition, cooling of the drive unit 24, the power conversion system 26 and/or the battery system 28 may be desirable in both relatively high ambient temperature conditions (summer conditions) and relatively low ambient temperature conditions (winter conditions).

In relatively low ambient temperature conditions, cooling peak demand may call for cooling of the drive unit 24, the power conversion system 26 and/or the battery system 28. The energy storage unit 80 may be used to supply cooling by capturing heat extracted from the drive unit 24, the power conversion system 26 and/or the battery system 28. Instead of releasing the heat to the air through the cooling unit 46, the energy storage unit 80 recycles the collected heat for later uses such as to preheat the battery system 28.

In relatively high ambient temperature conditions, cooling peak demands may be delivered by including a lower phase change temperature PCM 96 replacing the PCM(s) 84, 86. In relatively high ambient temperature conditions the cooling capacity of the cooling unit 46 may be limited and providing supplemental or alternative cooling via the energy storage unit 80 extends the cooling options.

The energy storage unit 80 provides both heating and cooling functions. By including PCM(s) 84, 86 with different phase change temperatures, or by recharging with a specifically selected PCM 96, multiple functions may be provided. For example, for heating purposes (e.g., preheating of the battery system 28), Na2SO4/10H2O which has a phase change temperature of 32.4 degrees Celsius, Na2SO3/5H2O which has a phase change temperature of 48.5 degrees C, or a composite material which has a phase change temperature of 58.4 degrees Celsius may be used. For cooling purposes, paraffin I which has a phase change temperature of 5 degrees Celsius or paraffin II which has a phase change temperature of 10 degrees Celsius may be used. By including one of the heating PCMs as PCM 84 and one of the cooling PCMs as PCM 86, both functions may be provided in one energy storage unit 80. In embodiments, by recharging with a cooling PCM 96 provides additional cooling capacity for meeting peak cooling demands in summer.

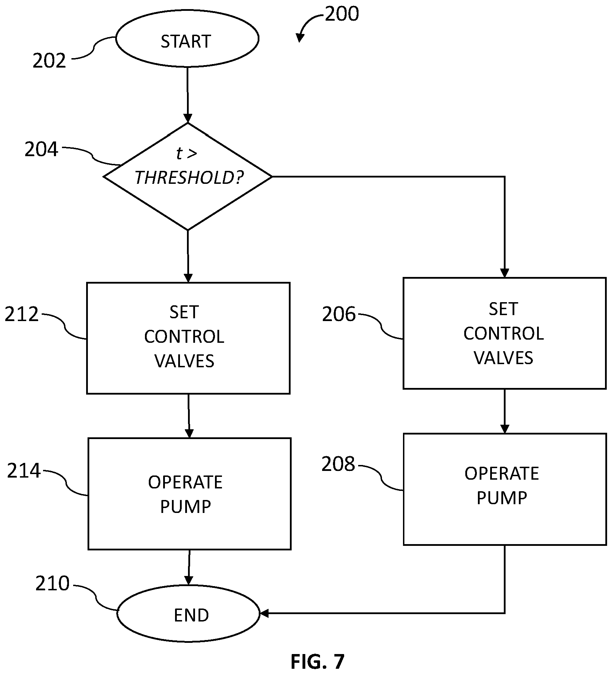

With reference to FIG. 7, a flowchart illustrates a process 200 for controlling operation of the thermal management system 40 and/or the electric vehicle 20 in cooling states, in accordance with exemplary embodiments. As will be appreciated in light of this disclosure, the order of operations within the process 200 is not limited to the sequential execution as illustrated in FIG. 7, and may be performed in one or more varying orders as applicable and in accordance with the present disclosure. In additional embodiments, additional steps may be included in the process 200 and/or some steps may be omitted from the process 200.

The process 200 may begin 202 when initiation of operation of the electric vehicle 20 occurs. A determination 204 may be made, such as by the controller 102 with input from the sensor system 104, whether a temperature is above a threshold. For example, the determination 204 may be whether ambient temperature is relatively high in the summer (e.g., above 30°C) or that the temperature of the battery system 28, the power conversion system 26 and/or the drive unit 24 is above a threshold indicating additional cooling is needed beyond the level from the cooling unit 46. When the determination is negative and the temperature is not above the threshold (e.g., winter conditions) and the drive system 22 is not at a peak cooling demand (which may also be determined by the controller 102 with input from the sensor system 104), the controller 102, via the actuators 62, 64, 66 sets 206 the control valves 52, 54, 56 to provide cooling through the energy storage unit 80 alone as described above in relation to FIG. 1. The process 200 proceeds to operate 208 the pump 50 to provide cooling through the energy storage unit 80 and the process 200 ends 210. When, in winter and a cooling peak demand does exist, the controller 102 via the actuators 62, 64, 66 sets 206 the control valves 52, 54, 56 to provide cooling through both the cooling unit 46 and the energy storage unit 80 as described above in relation to FIG. 2. The process 200 proceeds to operate 208 the pump 50 to provide cooling through the cooling unit 46 and the process 200 ends 210.

When the determination 204 is positive, meaning the monitored temperature is above the threshold (e.g., summer conditions), and the drive system 22 is not at a peak cooling demand (which may also be determined by the controller 102 with input from the sensor system 104), the process 200 via the controller 102 and the actuators 62, 64, 66 sets 212 the control valves 52, 54, 56 to provide cooling through the cooling unit 46 alone as described above in relation to FIG. 5. The process 200 proceeds to operate 214 the pump 50 to provide cooling through the cooling unit 46 and the process 200 ends 210. When a cooling peak demand does exist, the controller 102 via the actuators 62, 64, 66 sets 212 the control valves 52, 54, 56 to provide cooling through both the cooling unit 46 and the energy storage unit 80 as described above in relation to FIG. 6. The process 200 proceeds to operate 214 the pump 50 to provide cooling through the cooling unit 46 and the energy storage unit 80 and the process 200 ends 210. To provide cooling in summer temperatures, the energy storage unit 80 may be charged/recharged with a cooling PCM, such as when the electric vehicle 20 is on the ground during a flight turn-around.

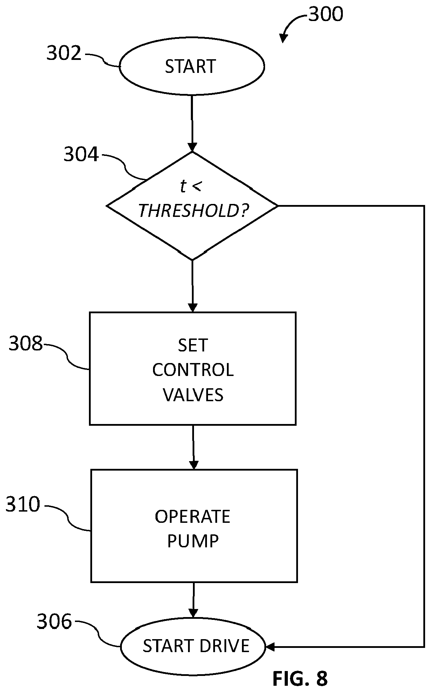

With reference to FIG. 8, a flowchart illustrates a process 300 for controlling operation of the thermal management system 40 and/or the electric vehicle 20 of FIGS. 1-3 in accordance with exemplary embodiments. In an example of the process 300, preheating of the battery system 28 may be initiated in certain conditions. As will be appreciated in light of this disclosure, the order of operations within the process 300 is not limited to the sequential execution as illustrated in FIG. 8, and may be performed in one or more varying orders as applicable and in accordance with the present disclosure. In additional embodiments, additional steps may be included in the process 300 and/or some steps may be omitted from the process 300.

The process 300 may begin 302 when initiation of operation of the electric vehicle 20 occurs. In some embodiments, the process 300 may begin 302 when a charging routine of the battery system 28 is initiated. A determination 304 may be made, such as by the controller 102 with input from the sensor system 104, whether a temperature is below a threshold. For example, the determination 304 may be whether the ambient temperature is relatively cool in winter (such as below 0° C). When the determination 304 is negative, meaning the temperature is not below the threshold (and summer conditions exist), the process 300 proceeds to start 306 the drive unit 24 as preheating is not needed.

When the determination 304 is positive, meaning the temperature is below the threshold (and winter conditions exist), the process 300 via the controller 102 and the actuators 62, 64, 66, sets 308 the control valves 52, 54, 56 to provide heating through the circuit as described above in relation to FIG. 3 for a winter state and discharge mode. The process 300 proceeds to operate 310 the pump 50 to provide heating through the heat release operation of the energy storage unit 80 to warm the battery system 28 and the process 300 then proceeds to start 306 the drive unit 24.

Accordingly, exemplary embodiments discussed herein provide additional cooling and heating through PCMs when needed, without depleting electric power from the battery system. Exemplary embodiments may find beneficial use in many applications, including electric drive systems in vehicles, in stationary machines, and in other applications.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A system comprising:
an electric drive unit coupled with a battery system and a power conversion system;
an energy storage unit containing at least one phase change material and configured to manage thermal energy; and
a fluid system extending through at least one of the electric drive unit, the battery system, and the power conversion system, and the fluid system extending through the energy storage unit, the fluid system configured to:
collect heat from at least one of the electric drive unit, the battery system and the power conversion system;
selectively store the heat in the energy storage unit in the at least one phase change material; and
selectively supply heat from the energy storage unit to the battery system.

2. The system of claim 1, comprising a controller configured to:
determine, by a sensor system, whether a temperature is above a threshold; and
operate, when the temperature is above the threshold, the fluid system to selectively collect the heat in the energy storage unit.

3. The system of claim 1, comprising a controller configured to:
determine, by a sensor system, whether a temperature is below a threshold; and
operate, when the temperature is below the threshold, the fluid system to selectively supply the heat from the energy storage unit to the battery system.

4. The system of claim 1, wherein the at least one phase change material includes a first phase change material with a phase change temperature selected for cooling the electric drive unit and a second phase change material selected for heating the battery system.

5. The system of claim 1, wherein the fluid system includes a cooling unit and a cooling circuit extending through the electric drive unit, the battery system, the power conversion system, and the cooling unit, the cooling circuit configured to cool the electric drive unit, the battery system, and the power conversion system.

6. The system of claim 1, wherein the fluid system includes a heat collection circuit extending through the electric drive unit, the battery system, the power conversion system, and the energy storage unit, the heat collection circuit configured to cool the electric drive unit, the battery system, and the power conversion system.

7. The system of claim 1, wherein the fluid system includes a heating circuit extending through the battery system and the energy storage unit, the heating circuit configured to heat the battery system.

8. The system of claim 1, comprising a control valve in the fluid system, the control valve configured to control fluid flow between the battery system, the power conversion system and the energy storage unit in a three-way control configuration.

9. The system of claim 1, comprising a cooling unit and a control valve in the fluid system, the control valve configured to control fluid flow between the electric drive unit, the cooling unit and the energy storage unit.

10. The system of claim 1, comprising a cooling unit and a control valve in the fluid system, the control valve configured to control flow between the energy storage unit, the battery system and the cooling unit.

11. A method comprising:
coupling an electric drive unit with a battery system and a power conversion system;
containing at least one phase change material in an energy storage unit configured to manage thermal energy;
extending a fluid system through the electric drive unit, the battery system, the power conversion system; and the energy storage unit;
collecting, by the fluid system, heat from the electric drive unit, the battery system and the power conversion system;
selectively storing the heat in the energy storage unit in the at least one phase change material; and
selectively supplying heat from the energy storage unit to the battery system.

12. The method of claim 11, comprising:
determining, by a controller and a sensor system, whether a temperature is above a threshold; and
operating, by the controller and when the temperature is above the threshold, the fluid system to selectively collect the heat in the energy storage unit.

13. The method of claim 11, comprising:
determining, by a controller and a sensor system, whether a temperature is below a threshold; and
operating, by the controller and when the temperature is below the threshold, the fluid system to selectively supply the heat from the energy storage unit to the battery system.

14. The method of claim 11, comprising:
selecting the at least one phase change material to include a first phase change material with a phase change temperature selected for cooling the electric drive unit; and
selecting the at least one phase change material to include a second phase change material selected for heating the battery system.

15. The method of claim 11, comprising:
including, in the fluid system, a cooling unit and a cooling circuit extending through the electric drive unit, the battery system, the power conversion system, and the cooling unit; and
cooling, by the cooling circuit, the electric drive unit, the battery system, and the power conversion system.
